# EUROPEAN PATENT APPLICATION

(11) **EP 4 043 834 A1**
(43) Date of publication of application: **17.08.2022**
(21) Application number: 21020070.5
(22) Date of filing: 11.02.2021
(51) Int. Cl.: G01D 4/00

(54) **GAUGE APPARATUS INCLUDING A FLAT PANEL DISPLAY AND A MECHANICAL POINTER**

(71) Applicant: Linde GmbH, 82049 Pullach (DE)
(72) Inventor: Thind, Mandip, Norwood Green, Southall UB2 5RS (GB); Jacobsen, Brian, London, SW12 9RF (GB); Reid, Dennis, Pulborough, West Sussex RH20 1AS (GB)
(74) Representative: Gellner, Bernd

(57) **Abstract**

Gauge (100) comprising a gauge needle (110) provided in a gauge housing (101) with a transparent front face , a rotational position of the gauge needle (110) in a rotational plane (115) extending parallel to the front face indicating a measurement value, the gauge needle comprising a stem (112) rotatable about a rotational axis (114) and an pointer (116) extending perpendicularly to the stem (112), a rotation of the stem (112) about the rotational axis (114) effecting a movement of the pointer (116) within the rotational plane, further comprising a capture unit (150) for capturing the rotational position of the gauge needle (110), the capture unit being provided at least in part on the front face of the gauge housing.

## Description

The invention relates to a gauge, an add-on kit for use with a gauge and a method for providing a gauge reading.

Prior to the introduction of digital valves, i.e. valves comprising a digital display output, it was common to display for example gas cylinder contents, usually in the form of cylinder pressure, using an analogue manometer gauge, also referred to as pressure gauge. Herein, the pressure value of a gas cylinder is converted into a rotational displacement of a pointer of a gauge needle. Such a pressure gauge may be incorporated into a regulator, which can be detached from the cylinder, or into an integrated valve, in which regulator, flow control and gauge are combined into one unit and permanently attached to the cylinder.

For numerous applications, for example medical applications, it is important to be able to enter a current pressure value of a gas cylinder into an associated computing unit in digitized form for further processing. With existing analogue pressure valves, this requires a manual reading of the pressure value by an operator, followed by a manual entering of the pressure value as read into the computing unit, typically using a keyboard or a touchscreen. This procedure is obviously cumbersome and error-prone.

The present invention seeks to simplify the providing of digitized meter readings for analogue gauges.

To this effect, the present invention suggests a gauge, an add-on kit for use with a gauge and a method for providing a gauge reading comprising the features of the respective independent claims.

The invention thus provides a gauge comprising a gauge needle provided in a gauge housing with a transparent front face , a rotational position of the gauge needle in a rotational plane extending parallel to the front face indicating a measurement value, the gauge needle comprising a stem rotatable about a rotational axis and a pointer extending perpendicularly to the stem, a rotation of the stem about the rotational axis effecting a movement of the pointer within the rotational plane, further comprising a capture unit for capturing the rotational position of the gauge needle, the capture unit being provided at least in part on the front face of the gauge housing. Such a gauge provides an easy visual reading, and at the same time a reliable digitalisation of measurement values.

Advantageous embodiments are the subject matter of the dependent claims.

Advantageously, the capture unit comprises at least one first electrode provided on the front face of the gauge housing, which is provided to interact with a second electrode provided by the gauge needle, the at least one first electrode and the gauge needle being connected via an external circuit adapted to measure the capacitance between the at least one first electrode and the gauge needle. Hereby, a reliable means is provided for digitalising a the reading of a gauge.

Preferably, the at least one first electrode is shaped and/or arranged such that the capacitance depends on the rotational position of the gauge needle. This provides a robust and reliable digitalised reading of a rotational position of a gauge needle and thus for example of a corresponding pressure value.

Expediently, the at least one first electrode comprises ultrathin wires and/or is provided as a transparent electrode, especially comprising indium tin oxide ITO. Hereby, visibility of a gauge dial remains essentially unobstructed for a user.

According to a further preferred embodiment, the capture unit comprises at least two planar spiral coils arranged at different positions on the front face, and a circuit adapted to compare the amplitude und phase of electromagnetic signals generated by the respective coils, especially using impulse inductance, inductance null signal or differential signal techniques. Advantageously, these spiral coils are provided to be identical to one another, thereby simplifying comparison of phases and amplitudes. Further, these coils are preferably arranged on sections of the front face outside of the dial area, i.e. the area over which the gauge needle sweeps. This minimises visual obstruction. The coils can also comprise ultra thin wires, or be made out of transparent materials.

According to a further embodiment, the capture unit comprises at least one light sensitive sensor, especially a CCD sensor, a CMOS sensor or a linear photodiode array, aranged in the vicinity or on the front face, and an irradiation unit arranged such that irradiation from the irradiation unit interacts with the gauge needle before being detected by the at least one light sensitive sensor. Interaction with the needle may, for example, comprise that the irradiation passes the needle such that the needle casts a shadow on the capture unit, or reflection by the needle.

Advantageously, parts of the capture unit and/or the irradiation unit provided on or in the vicinity of the front face are arranged above an area of the front face under which the gauge needle does not rotate.

Expediently, there is provided a computing unit for calculating the rotational position of the gauge needle on the basis of signals captured by the capture unit and a pressure value on the basis of the rotational position of the gauge needle.

According to a preferred embodiment, the gauge is provided as a pressure gauge, the measurement value being a pressure value.

The invention also suggests an add-on kit for a gauge, especially a pressure gauge comprising a gauge needle , a rotational position of which in a rotational plane indicating a pressure value, the gauge needle comprising a stem rotatable about a rotational axis and a pointer extending perpendicularly to the stem , a rotation of the stem about the rotational axis effecting a movement of the pointer within the rotational plane, the add-on kit comprising a capture unit for capturing the rotational position of the gauge needle, the capture unit being provided to be arranged at least in part on the front face of the gauge housing.

The invention further suggests a method for providing a digitized gauge reading for a gauge, especially a pressure gauge, comprising a gauge needle provided in a gauge housing comprising a transparent front face, a rotational position of the gauge needle in a rotational plane extending parallel to the front face indicating a measurement value, the gauge needle comprising a stem rotatable about a rotational axis and a pointer extending perpendicularly to the stem, a rotation of the stem about the rotational axis effecting a movement of the pointer within the rotational plane, the method comprising capturing the rotational position of the gauge needle by means of a capture unit provided at least in part on the front face of the gauge housing.

Advantageously, a computing unit, for example a customized microcontroller, for calculating the rotational position of the gauge needle on the basis of the irradiation captured by the capture unit and the corresponding pressure value on the basis of the rotational position of the gauge needle is provided.

Further advantageous embodiments of the invention will now be described with reference to the appended drawings.
Figure 1 is a schematic side sectional view of a first embodiment of the invention,
Figure 2 is a schematic plan view of the first embodiment of the invention with the gauge needle shown in a number of different first rotational positions ,
Figure 3 is a schematic plan view of a second embodiment of the invention,
Figure 4 is a schematic side view of a third embodiment of the invention, and

In the figures like components are designated with like reference numerals.

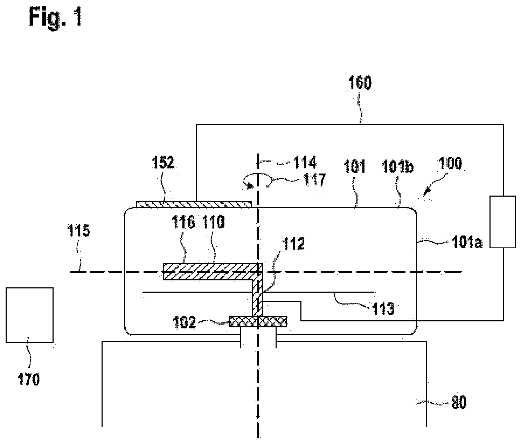

Figure 1 shows a schematic side view of a first embodiment of the invention. A pressure gauge generally designated 100 comprises a housing 101 including a cylindrical side wall 101a and a front face 101b. Front face 102b is made of a transparent material. Furthermore, pressure gauge comprises a pressure sensitive mechanism 102 within the housing 101, which is shown purely schematically. Gauge 100 is adapted to be affixed to a gas cylinder 80.

The mechanism 102 is adapted to provide a rotational movement in case of increasing or decreasing pressure within gas cylinder 80.

This rotational motion is imparted on a gauge needle 110 rotatable about an axis 114, which interacts with the mechanism 102 in a known manner. The rotation of gauge needle about axis 114 is indicated by means of circular arrow 117.
Typical examples of such mechanisms can be found in prior art Bourdon gauges, for example. Such a gauge needle comprises a stem 112 and a pointer 116. For example, the motion can be transferred by means of a small-diameter pinion gear system provided, so the rotational motion of the mechanism can be magnified to provide easier reading of the needle position for a user. Herein, the stem 112 is rotatable about rotational axis 114. The movement of the pointer 116 thus defines a rotational plane 115 perpendicular to rotational axis 114. By means of an indicator card 113 comprising a dial located behind the pointer (seen form the side of front face 101b), readings of the rotational position of pointer 116 indicating pressure within gas cylinder 80 can be easily obtained by an operator via visual reading.

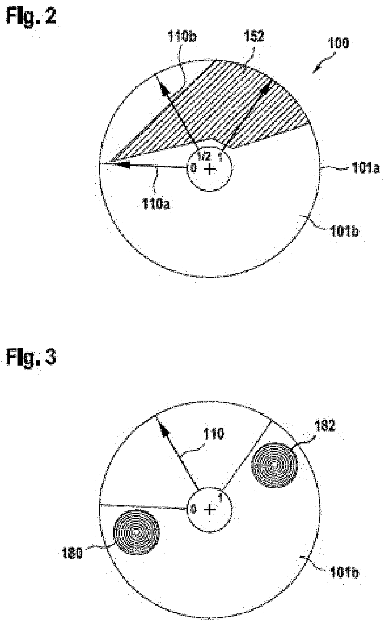

A first electrode 152 is provided on the front face 101b of the gauge housing, which is provided to interact with the gauge needle 110, which herein acts as a second electrode, the at least one first electrode and the gauge needle 110 being connected via schematically indicated external circuitry 160 adapted to measure the capacitance between the first electrode 152 and the gauge needle 110. Preferably, first electrode 152 comprises ultrathin wires and/or is provided to be transparent, so that visibility of the dial and the rotational position of gauge needle 116 is not impaired for a user. As a further example, first electrode 152 can be provided as an essentially transparent tin oxide electrode. The first electrode 152 is shaped such that the capacitance will vary depending on the rotational position of the gauge needle, as will now be explained with specific reference to Figure 2.

In Figure 2, gauge needle 116 is shown in three different rotational positions, designated 110a, 110b, and 110c for ease of reference. Be it assumed that position 110a corresponds to an empty state of gas cylinder 80 (minimum pressure), position 110b to a half full state (intermediate pressure), and position 110c to a full state (maximum pressure). First electrode 152, indicated by hatching in Figure 2, is shaped such that in position 110a the overlap between gauge needle 110 and first electrode 152 is minimal. In position 110b, the overlap has an intermediate value, as can by seen by around half the pointer 110 overlapping the first electrode. In position 110c, essentially the whole pointer 110 of gauge needle 116 overlaps the first electrode.

Obviously, first electrode is advantageously shaped such that the overlap between rotatonal positions indicating minimum pressure and maximum pressure gradually varies proportionally to the pressure within the gas cylinder.

Alternatively to the single first electrode shown in Figures 1 and 2, it would also be possible to provide a number of separate first electrodes. For example, these could be arranged to each extend radially from the central axis, and be provided with increasing lengths between a minimal length at a position corresponding to rotational position 110a, and a maximum length at a position corresponding to rotational position 110c. Here again, the overlap between gauge needle 116 and the respective first electrodes would vary depending on the rotational position of gauge needle 116.

According to a second embodiment shown in Figure 3, two metallic planar spiral coils 180, 182 are provided in the front face of gauge 100. The coils can be provided as planar stickers to be adhesively bonded to the front face 101b. The coils are preferably provided to be identical. Preferably, the coils 180, 182 are located in the vicinity of the rotational positions of gauge needle 110 corresonding to minimum and maximum pressure, such that they do not obscure the dial and the gauge needle for the user. By comparing the amplitude and phase of suitably amplified signals generated by coils 180,182, for example using impulse incuctance, inductance null signal or differential signal techniques, the rotational position of gauge needle 116 can be determined.

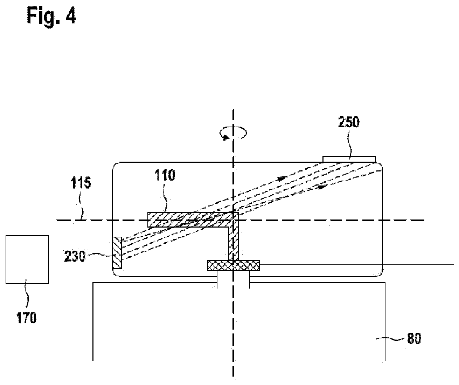

According to a third embodiment, shown in Figure 4 , gauge 100 comprises an irradiation unit 230 attached to the inner surface of cylindrical side wall 101a or arranged at any other suitable location, where it its illumination light can be directed towards gauge needle 110 , as well as a capture unit 250 arranged on the inner or outer side of front face 101b and adapted to capture irradiation light emitted by irradiation unit 230 after this has interacted with needle110.

The irradiation unit 230 is prefersably provided as an LED, and the capture unit 250 as a CCD sensor, a CMOS sensor or a linear photodiode array. Be it noted that the gauge 100 can comprise a plurality of irradiation units 230 and/or capture units 250. The illumination light impinges on the gauge needle, which thus casts a shadow on the capture unit 250. Illumination unit 230 and capture unit 250 are arranged such that the signal detected by the capture unit will depend on the rotational position of gauge needle 110 and thus the pressure within gas cylinder 80.

The pressure can or example be calculated by comparing the detected signal with predetermined signals for varying pressures.

The detected signal, which is compared to predetermined signals, can either be the shadow cast by the gauge needle, or the bright signal surrounding this shadow. Both types of detected signal will vary with the position of the gauge needle. Alternatively, the irradiation unit can be positioned such that illumination light reflected by the gauge needle 110 can be detected by the capture unit 250. For example, both the irradiation unit 230 and the capture unit can be provided on the inner or outer surface of the front face 101b. Preferably, the capture unit 250 and/or the illumination unit 230 are arranged on the section of front face 101b not covering the dial area, in order to avoid obscuring the dial for a user.

The wavelength of the illumination light is chosen such that it is optimally adapted to the sensitivity of capture unit 250, and/or such that signal to noise ratios can be improved. Optical filters may also be used over the capture unit to filter out unwanted background lighting. Infrared illumination lighting could be used, such that, for example, the illumination light is invisible to the naked eye. Increased battery life may be achieveb, for example, by pulsing the illumination unit, for example an LED source, only when required.

In all embodiments described above, the pressure within gas cylinder 80 is output to a microcontroller (schematically designated 170). Microcontroller 170 can use this information to alert a user to low gas content or pressure either locally, or by using a wireless transmission to a remote display. Multiple wireless transmissions from digitally equipped gas cylinders could also be used for an inventory management system at a customer site such as a hospital. The pressure values obtained in this way can be used as a cross reference check, a so called dead reckoning, for other methods aiming to measure the remaining content in a gas cylinder by measuring the flow of gas exiting the cylinder.

The invention is advantageous in that non-digital valves or gauges can be easily upgraded to have a digital functionality. All components added on to a prior art gauge, especially illuminating units, capture units and computing units, can be provided at low cost.
These components can especially be provided as an add-on kit to enhance existing analogue valves or gauges. Long battery lifetimes can be provided by only monitoring needle position when necessary, a specific measurement being achievable in a short space of time, e.g. a few milliseconds. The invention provides a non invasive method that requires no interference with high pressure components of a gas cylinder. Also, no parts of existing gauges must be dismantled, i.e. the invention provides a plug and play solution.

The invention is not only applicable to gauges, especially pressure gauges, it can also be used for example in applications where a gauge position needs to be monitored without obscuring the front face of the gauge, and/or where replacement of an existing analogue gauge with a digital gauge is cost prohibitive, such as any needle measuring a flow, a speedometer in a car etc.

## Claims

1. Gauge (100) comprising a gauge needle (110) provided in a gauge housing (101) with a transparent front face , a rotational position of the gauge needle (110) in a rotational plane (115) extending parallel to the front face indicating a measurement value, the gauge needle comprising a stem (112) rotatable about a rotational axis (114) and an pointer (116) extending perpendicularly to the stem (112), a rotation of the stem (112) about the rotational axis (114) effecting a movement of the pointer (116) within the rotational plane, further comprising a capture unit (150) for capturing the rotational position of the gauge needle (110), the capture unit being provided at least in part on the front face of the gauge housing.

2. Gauge according to claim 1, wherein the capture unit comprises at least one first electrode provided on the front face of the gauge housing, which is provided to interact with a second electrode provided by the gauge needle (110), the at least one first electrode and the gauge needle (110) being connected via an external circuit adapted to measure the capacitance between the at least one first electrode and the gauge needle (110).

3. Gauge according to claim 2, wherein the at least one first electrode is shaped and/or arranged such that the capacitance depends on the rotational position of the gauge needle.

4. Gauge needle according to any one of the preceding claims, wherein the at least one first electrode comprises ultrathin wires and/or is provided as a transparent electrode, especially comprising Indium Tin Oxide ITO.

5. Gauge needle according to claim 1, wherein the capture unit comprises at least two planar spiral coils arranged at different positions on the front face , and a circuit adapted to compare the amplitude und phase of electromagnetic signals generated by the respective coils, especially using impulse inductance, inductance null signal or differential signal techniques.

6. Gauge according to claim 1, wherein the capture unit comprises at least one light sensitive sensor, especially a CCD sensor, a CMOS sensor or a linear photodiode array, aranged in the vicinity or on the front face, and an irradtiation unit arranged such that irradiation from the irradiation unit interacts with the gauge needle (110) before being detected by the at least one licght sensitive sensor.

7. Gauge according to any one of the preceding claims, wherein parts of the capture unit provided on or in the vicinity of the front face are arranged abave an area of the front face under which the gauge needle does not rotate.

8. Gauge according to any one of the preceding claims, comprising a computing unit (170) for calculating the rotational position of the gauge needle (110) on the basis of signals captured by the capture unit (150) and a pressure value on the basis of the rotational position of the gauge needle (110).

9. Gauge according to any one of the preceding claims, which is provided as a pressure gauge, the measurement value being a pressure value.

10. Add-on kit for a gauge, especially a pressure gauge, comprising a gauge needle (110), a rotational position of which in a rotational plane (115) indicating a pressure value, the gauge needle comprising a stem (112) rotatable about a rotational axis (114) and a pointer (116) extending perpendicularly to the stem (112), a rotation of the stem (112) about the rotational axis (114) effecting a movement of the pointer (116) within the rotational plane, the add-on kit comprising a capture unit (150) for capturing the rotational position of the gauge needle (110), the capture unit being provided to be arranged at least in part on the front face of the gauge housing.

11. Method for providing a digitized gauge reading for a gauge, especially a pressure gauge, comprising a gauge needle (110) provided in a gauge housing (101) comprising a transparent front face, a rotational position of the gauge needle in a rotational plane (115) extending parallel to the front face indicating a measurement value, the gauge needle comprising a stem (112) rotatable about a rotational axis (114) and an pointer (116) extending perpendicularly to the stem (112), a rotation of the stem (112) about the rotational axis (114) effecting a movement of the pointer (116) within the rotational plane (115), the method comprising capturing the rotational position of the gauge needle by means of a capture unit provided at least in part on the front face of the gauge housing
